Europäisches Patentamt

European Patent Office

Office européen des brevets

(11) Veröffentlichungsnummer: **0 168 039**
**B1**

(12) # EUROPÄISCHE PATENTSCHRIFT

(45) Veröffentlichungstag der Patentschrift:
31.01.90

(51) Int. Cl.⁴: **H 04 Q 3/42, H 04 M 1/27,**
**H 04 M 11/08**

(21) Anmeldenummer: 85108547.2

(22) Anmeldetag: 10.07.85

(54) Schaltungsanordnung zum Anschalten einer einer Fernsprechstelle zugeordneten sprachgesteuerten Zusatzeinrichtung an eine Fernsprechleitung.

(30) Priorität: 13.07.84 DE 3425789

(43) Veröffentlichungstag der Anmeldung:
15.01.86 Patentblatt 86/3

(45) Bekanntmachung des Hinweises auf die Patenterteilung:
31.01.90 Patentblatt 90/5

(84) Benannte Vertragsstaaten:
AT CH DE FR GB LI NL

(56) Entgegenhaltungen:
EP-A- 0 027 596
EP-A- 0 045 941
EP-A- 0 105 441

(73) Patentinhaber: ALCATEL N.V.,
Strawinskylaan 537 (World Trade Center), NL-1077 XX
Amsterdam (NL)

(84) Benannte Vertragsstaaten: CH FR GB LI NL AT

(73) Patentinhaber: Standard Elektrik Lorenz
Aktiengesellschaft, Lorenzstrasse 10,
D-7000 Stuttgart 40 (DE)

(84) Benannte Vertragsstaaten: DE

(72) Erfinder: Hörmann, Thomas, Rosenstrasse 5,
D-7141 Grossbottwar /WZH (DE)
Erfinder: Immendörfer, Manfred Dr., Grabenstrasse 5,
D-7257 Ditzingen 3 (DE)
Erfinder: Kopp, Dieter, Hirschstrasse 34,
D-7251 Hemmingen (DE)

(74) Vertreter: Villinger, Bernhard, Dipl.-Ing. et al, Standard
Elektrik Lorenz AG Patent- und Lizenzwesen
Postfach 30 09 29, D-7000 Stuttgart 30 (DE)

## Beschreibung

Die Erfindung betrifft eine Schaltungsanordnung zum Anschalten einer einer Fernsprechstelle zugeordneten sprachgesteuerten Zusatzeinrichtung an eine Fernsprechleitung, wobei die sprachgesteuerte Zusatzeinrichtung eine Spracherkennungseinheit und eine Auswahlsteuerung enthält. Eine solche Anordnung ist aus der EP-A-0 027 596 bekannt. Auch in der Anmeldung EP-A-0 141 289 (Priorität 12.10.83, veröffentlicht 15.5.85) wurde bereits eine Teilnehmersprechstelleneinrichtung beschrieben, die durch direkte akustische Eingabe von Wörtern und/oder Ziffern über das Mikrofon des Handapparates eine sprachgesteuerte Wahl eines zu rufenden Teilnehmers ermöglicht.

Ein Nachteil der beschriebenen Anordnung besteht jedoch darin, daß zum Anschluß der sprachgesteuerten Zusatzeinrichtung technische Veränderungen in der Fernsprechstelle vorgenommen werden müssen.

Der Erfindung liegt die technische Aufgabe zugrunde, eine Schaltungsanordnung zum Anschalten einer einer Fernsprechstelle zugeordneten sprachgesteuerten Zusatzeinrichtung an eine Fernsprechleitung zu schaffen.

Eine erfindungsgemäße Schaltungsanordnung der eingangs genannten Art ist dadurch gekennzeichnet, daß eine Schalteinheit einer Anschalteinrichtung in eine a-Ader, eine b-Ader und eine Erdleitung der Fernsprechleitung eingeschleift sowie mit der Spracherkennungseinheit und über eine Unterbrechungseinheit der Anschalteinrichtung mit der Auswahlsteuerung verbunden ist, wodurch die Fernsprechstelle über die Fernsprechleitung entweder an eine Vermittlungsstelle oder an die sprachgesteuerte Zusatzeinrichtung geschaltet wird, daß die Anschalteinrichtung eine Amtsprüflogik, eine Wahleinheit, eine Schleifenüberwachung und eine Erdtastenüberwachung aufweist, welche einerseits in die Fernsprechleitung eingeschleift und andererseits über eine erste Schnittstelleneinheit der sprachgesteuerten Zusatzeinrichtung an die Auswahlsteuerung angeschlossen sind und daß ein in der Anschalteinrichtung die a-Ader und die b-Ader verbindender erster Schalter über die erste Schnittstelleneinheit an die Auswahlsteuerung geführt ist.

Ein Vorteil der Erfindung liegt insbesondere darin, daß jede beliebige Fernsprechstelle ohne technische Veränderungen mit der sprachgesteuerten Zusatzeinrichtung verbunden werden kann.

Weitere vorteilhafte Ausbildungen des Gegenstandes der Erfindung sind den Unteransprüchen zu entnehmen.

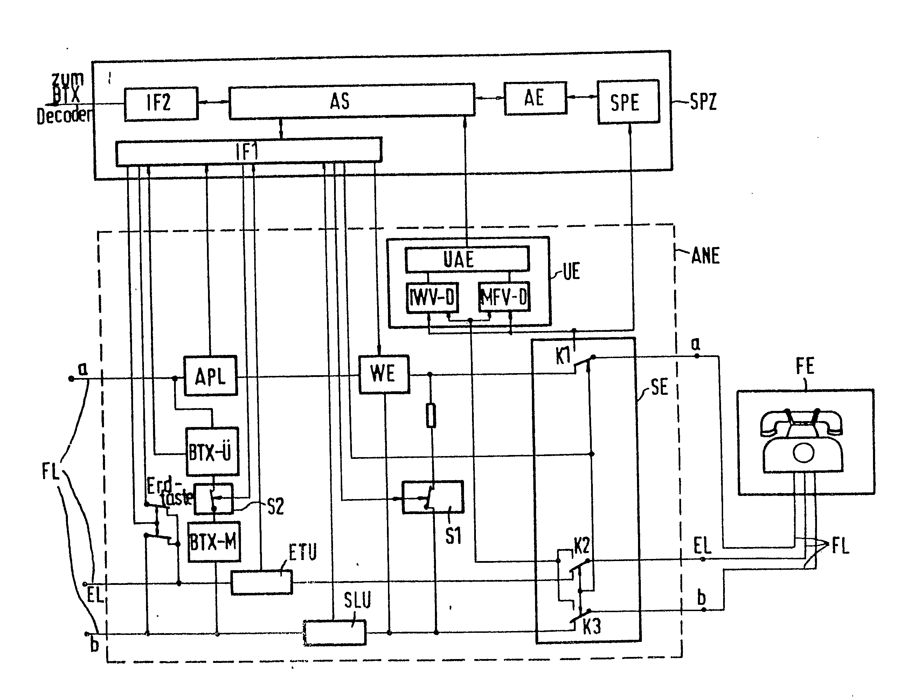

Ein Ausführungsbeispiel der Erfindung wird im folgenden anhand der Zeichnung erläutert.

Eine sprachgesteuerte Zusatzeinrichtung SPZ, wie der einzigen Figur zu entnehmen ist, weist eine Auswahlsteuerung AS auf, welche einerseits über eine Anpassungseinheit AE an eine Spracherkennungseinheit SPE und andererseits an eine erste Schnittstelleneinheit IF1 angeschlossen ist.

Eine Schalteinheit SE einer Anschalteinrichtung ANE ist in eine a-Ader a, eine b-Ader b und eine Erdleitung EL einer Fernsprechleitung FL eingeschleift sowie mit der Spracherkennungseinheit SPE und über eine Unterbrechungseinheit UE der Anschalteinrichtung ANE mit der Auswahlsteuerung AS verbunden.

Die Anschalteinrichtung ANE enthält eine in die a-Ader a und die b-Ader b eingeschleifte Amtsprüflogik APL, eine in die a-Ader a und die b-Ader b geschaltete Wahleinheit WE, eine an die Erdleitung EL angeschlossene Erdtastenüberwachung ETU und eine in die a-Ader a und die b-Ader b eingefügte Schleifenüberwachung SLU. Diese vier Einheiten sind jeweils über die ersten Schnittstelleneinheit IF1 an die Auswahlsteuerung AS der sprachgesteuerten Zusatzeinrichtung SPZ geführt. Ferner ist in der Anschalteinrichtung ANE ein die a-Ader a und die b-Ader b verbindender erster Schalter S1 über die erste Schnittstelleneinheit IF1 an die Auswahlsteuerung AS angeschlossen.

Wird nun ein Handapparat einer zugeordneten Fernsprechstelle FE abgenommen, so signalisiert die Schleifenüberwachung SLU über die erste Schnittstelleneinheit IF1 der Auswahlsteuerung AS, daß die Schleife der mit der Fernsprechstelle FE verbundenen Fernsprechleitung FL geschlossen wurde. Hat nun die Amtsprüflogik APL festgestellt, daß z.B. ein ankommendes Gespräch vorliegt (kein Wählton), so wird dies der Auswahlsteuerung AS über die erste Schnittstelleneinheit IF1 gemeldet. Die Anschalteinrichtung ANE wird dann von der Auswahlsteuerung AS in den sogenannten «Transparentmode» geschaltet, d.h. die Anschalteinrichtung ANE kann den Sprechweg (a-Ader a, b-Ader b) nicht beeinflussen.

Handelt es sich dagegen um ein abgehendes Gespräch, das der Auswahlsteuerung AS durch die Detektion des Wähltones in der Amtsprüflogik APL gemeldet wird, so steuert die Auswahlsteuerung AS die folgenden Vorgänge.

Zuerst wird der erste Schalter S1 geschlossen, so daß keine Unterbrechung des Schleifenstromes erfolgen kann. Dann wird die Fernsprechstelle FE durch die Schalteinheit SE über die Fernsprechleitung FL an die sprachgesteuerte Zusatzeinrichtung SPZ geschaltet. Hierzu wird der Sprechweg (a-Ader a, b-Ader b) und die Erdleitung EL über einen ersten Schaltkontakt K1, einen zweiten Schaltkontakt K2 und einen dritten Schaltkontakt K3 der Schalteinheit SE einerseits mit der Spracherkennungseinheit SPE und andererseits über die Unterbrechungseinheit UE mit der Auswahlsteuerung AS verbunden.

Der Teilnehmer gibt nun akustisch über das Mikrofon des Handapparates der Fernsprechstelle FE in Form von Wörtern und/oder Ziffern sein Wahlziel ein. Das Sprachsignal wird in der Spracherkennungseinheit SPE verarbeitet, in dem die Ähnlichkeit eines gesprochenen Wortes (Ziffer) mit abgespeicherten Referenzmusterdaten verglichen wird. Die Speicherplatznummer des ähnlichsten Musters adressiert den entsprechenden Teilnehmernamen (Ziffer) in einem Namenspeicher und aus einem diesem Namenspeicher zugeordneten Rufnummernspeicher wird die zu wählende Rufnummer ausgelesen. Die Auswahlsteuerung AS gibt die codierten Rufnummernsignale über die erste Schnittstelleneinheit IF1 an die Wahleinheit WE weiter, welche die Umsetzung in Wahlsignale auslöst die von der Vermittlungsstelle verarbeitet werden können. Da die Wahleinheit WE einerseits ein Modul für das Impulswahlverfahren (IWV) und andererseits ein Modul für das Mehrfrequenzcodewahlverfahren (MFV) enthält, können wahlweise beide Wahlverfahren eingesetzt werden.

Sobald der Wahlvorgang abgeschlossen ist, wird durch die Auswahlsteuerung AS wieder über den ersten, zweiten und dritten Schaltkontakt K1, K2, K3 der Schalteinheit SE die Fernsprechstelle FE an die Vermittlungsstelle zurückgeschaltet sowie der Schalter S1 geöffnet, so daß der Teilnehmer das gewünschte Gespräch führen kann.

Nunmehr befindet sich die Auswahlsteuerung AS in einem Wartezustand, wobei der Betriebszustand durch die angeschlossene Schleifenüberwachung SLU (geschlossene Schleife im Gegensatz zum aufgelegten Handapparat) und die Erdtastenüberwachung ETU kontrolliert wird. Nach dem Gesprächsende (Auflegen des Handapparates), welches durch die Schleifenüberwachung SLU der Auswahlsteuerung AS übermittelt wird, geht die Auswahlsteuerung AS wieder in den Anfangszustand zurück. Wird jedoch während des Gespräches zum Zwecke der Weiterverbindung z.B. in einer Nebenstellenanlage die Erd- oder Flashtaste betätigt, welches durch die Erdtastenüberwachung ETU oder die Schleifenüberwachung SLU detektiert wird, so werden wieder dieselben bereits zu Anfang beschriebenen Vorgänge (beginnend mit der Amtsprüflogik APL) von der Auswahlsteuerung AS gesteuert.

Bei der erfindungsgemäßen Einrichtung ist die Durchführung eines «konventionellen» Verbindungsaufbaus durch eine manuelle Eingabe der Rufnummer über eine Wählscheibe oder ein Nummerntastenfeld der Fernsprechstelle FE ohne die Verwendung der sprachgesteuerten Zusatzeinrichtung SPZ jederzeit möglich.

Hierzu weist die Anschalteinrichtung ANE eine Unterbrechungseinheit UE auf. Diese enthält eine Decodiereinheit für das Impulswahlverfahren IWV-D und eine Decodiereinheit für das Mehrfrequenzcodewahlverfahren MFV-D, welche über eine Unterbrechungsanforderungseinheit UAE an die Auswahlsteuerung AS angeschlossen sind. Nach dem Abnehmen des Handapparates der Fernsprechstelle FE laufen zunächst die zuvor beschriebenen Vorgänge ab. Betätigt nun der Teilnehmer die Wahlscheibe oder das Nummerntastenfeld, so wird dies durch die oben genannten Decodiereinheiten IWV-D, MFV-D erkannt. Daraufhin erhält die Auswahlsteuerung AS durch die Unterbrechungsanforderungseinheit UAE einen Unterbrechungsbefehl, wodurch die Auswahlsteuerung AS ein sofortiges Zurückschalten des Fernsprechapparates FE über die Fernsprechleitung FL durch die Schalteinheit SE an die Vermittlungsstelle sowie das Öffnen des ersten Schalters S1 auslöst. Die Wahlsignale können ohne Verlust direkt zur Vermittlungsstelle übertragen werden.

Ein weiterer Vorteil der erfindungsgemäßen Schaltungsanordnung besteht darin, daß eine Reihenschaltung aus einem Bildschirmtextmodem BTX-M und einer Bildschirmtextüberwachungseinheit BTX-Ü über einen zweiten Schalter S2 in der Anschalteinrichtung ANE mit der A-Ader a und der b-Ader b verbunden werden kann. Dabei ist einerseits die Auswahlsteuerung AS über die erste Schnittstelleneinheit IF1 an den zweiten Schalter S2 geführt und andererseits über eine zweite Schnittstelleneinheit IF2 an einen Bildschirmtextdecoder eines Fernsehapparates angeschlossen.

Der Teilnehmer kann durch akustische Eingabe von Wörtern und/oder Ziffern über das Mikrofon des Handapparates der Fernsprechstelle FE das Leistungsmerkmal Bildschirmtext-Dienst per Sprache abrufen. Durch die Eingabe eines Kommandos, wie z.B. «Bildschirmtext», das durch die sprachgesteuerte Zusatzeinrichtung SPZ verarbeitet wird, wird sodann durch die Auswahlsteuerung AS das Bildschirmtextmodem BTX-M mittels des zweiten Schalters S2 an die Fernsprechleitung FL angeschaltet. Das Bildschirmtextmodem BTX-M wählt – nach Einschalten des Fernsehapparates – automatisch die Bildschirmtextzentrale an. Wenn die Bildschirmtextüberwachungseinheit BTX-Ü eine Belegung erkannt und diese der Auswahlsteuerung AS gemeldet hat, wird der erste Schalter S1 wieder geöffnet.

Die Spracherkennungseinheit SPE bleibt nun zur «Sprachsteuerung» mit der Fernsprechstelle FE verbunden. Der Teilnehmer gibt akustisch in Form von Wörtern und/oder Ziffern seine Bildschirmtextsteuerkommandos ein. Das Sprachsignal wird in der Spracherkennungseinheit SPE verarbeitet und mit abgespeicherten Referenzmustern verglichen. Die Speicherplatznummer des ähnlichsten Musters adressiert einen entsprechenden Bildschirmtext-Codespeicher, dessen Inhalt ausgelesen und über die zweite Schnittstelleneinheit IF2 an den BTX-Decoder eines Fernsehapparates weitergeleitet wird. Dadurch wird ein Steuervorgang beim Abruf des Bildschirmtext-Dienstes ausgelöst. Bei Beendigung des Bildschirmtext-Dienstes wird die Auswahlsteuerung AS und somit die Anschalteinrichtung ANE in den Anfangszustand zurückgesetzt.

Bei einem eventuellen Spannungsausfall der sprachgesteuerten Zusatzeinrichtung SPZ oder der Anschalteinrichtung ANE werden die übrigen Funktionen der Fernsprechstelle FE nicht beeinträchtigt.

Bezugszeichenliste:

| a | a-Ader |
| b | b-Ader |
| AE | Anpassungseinheit |
| ANE | Anschalteinrichtung |
| APL | Amtsprüflogik |
| AS | Auswahlsteuerung |
| BTX-M | Bildschirmtextmodem |
| BTX-Ü | Bildschirmtextüberwachungseinheit |

| EL | Erdleitung |
|---|---|
| ETU | Erdtastenüberwachung |
| FE | Fernsprechstelle, sprachgesteuerte |
| FL | Fernsprechleitung |
| IF1 | erste Schnittstelleneinheit |
| IF2 | zweite Schnittstelleneinheit |
| IWV-D | IWV-Decodiereinheit |
| MFV-D | MFV-Decodiereinheit |
| S1 | erster Schalter |
| S2 | zweiter Schalter |
| SE | Schalteinheit |
| SLU | Schleifenüberwachung |
| SPE | Spracherkennungseinheit |
| SPZ | Zusatzeinrichtung |
| UE | Unterbrechungseinheit |
| UAE | Unterbrechungsanforderungseinheit |
| WE | Wahleinheit |

**Patentansprüche**

1. Schaltungsanordnung zum Anschalten einer einer Fernsprechstelle (FE) zugeordneten sprachgesteuerten Zusatzeinrichtung (SPZ) an eine Fernsprechleitung (FL), wobei die sprachgesteuerte Zusatzeinrichtung (SPZ) eine Spracherkennungseinheit (SPE) und eine Auswahlsteuerung (AS) enthält, dadurch gekennzeichnet, daß eine Schalteinheit (SE) einer Anschalteinrichtung (ANE) in eine a-Ader (a), eine b-Ader (b) und eine Erdleitung (EL) der Fernsprechleitung (FL) eingeschleift sowie mit der Spracherkennungseinheit (SPE) und über eine Unterbrechungseinheit (UE) der Anschalteinrichtung (ANE) mit der Auswahlsteuerung (AS) verbunden ist, wodurch die Fernsprechstelle über die Fernsprechleitung (FL) entweder an eine Vermittlungsstelle oder an die sprachgesteuerte Zusatzeinrichtung (SPZ) geschaltet wird, daß die Anschalteinrichtung (ANE) eine Amtsprüflogik (APL), eine Wahleinheit (WE), eine Schleifenüberwachung (SLU) und eine Erdtastenüberwachung (ETU) aufweist, welche einerseits in die Fernsprechleitung (FL) eingeschleift und andererseits über eine erste Schnittstelleneinheit (IF1) der sprachgesteuerten Zusatzeinrichtung (SPZ) an die Auswahlsteuerung (AS) angeschlossen sind und daß ein in der Anschalteinrichtung (ANE) die a-Ader (a) und die b-Ader (b) verbindender erster Schalter (S1) über die erste Schnittstelleneinheit (IF1) an die Auswahlsteuerung (AS) geführt ist.

2. Schaltungsanordnung nach Anspruch 1, dadurch gekennzeichnet, daß durch direkte akustische Eingabe von Wörtern und/oder Ziffern über ein Mikrofon eines Hörers der Fernsprechstelle (FE) die sprachgesteuerte Zusatzeinrichtung (SPZ) in der Wahleinheit (WE) eine automatische Wahl des zu rufenden Teilnehmers steuert.

3. Schaltungsanordnung nach Anspruch 1 oder 2, dadurch gekennzeichnet, daß eine Reihenschaltung aus einem Bildschirmtextmodem (BTX-M) und einer Bildschirmtextüberwachungseinheit (BTX-Ü) über einen zweiten Schalter (S2) in der Anschalteinrichtung (ANE) mit der a-Ader (a) und der b-Ader (b) der Fernsprechleitung (FL) verbunden wird, daß der zweite Schalter (S2) und die Bildschirmtextüberwachungseinheit (BTX-Ü) über die erste Schnittstelleneinheit (IF1) an die Auswahlsteuerung (AS) angeschlossen ist, daß die Auswahlsteuerung (AS) über eine zweite Schnittstelleneinheit (IF2) an einen Bildschirmtextdecoder eines Fernsehapparates geführt ist und daß durch direkte akustische Eingabe von Wörtern und/oder Ziffern über das Mikrofon des Hörers der Fernsprechstelle (FE) über die sprachgesteuerte Zusatzeinrichtung (SPZ) ein Bildschirmtextdienst gesteuert wird.

4. Schaltungsanordnung nach einem der vorhergehenden Ansprüche, dadurch gekennzeichnet, daß die Wahleinheit (WE) und die Unterbrechungseinheit (UE) ein erstes Modul für das Impulswahlverfahren (IWV) und ein zweites Modul für das Mehrfrequenzcodewahlverfahren (MFV) enthalten.

5. Schaltungsanordnung nach Anspruch 2 oder 4, dadurch gekennzeichnet, das in Kombination mit oder anstelle der Wahl durch akustische Eingabe von Wörtern und/oder Ziffern auch eine manuelle Wahl über eine Wahlscheibe oder ein Nummerntastenfeld der Fernsprechstelle (FE) durchgeführt werden kann.

**Claims**

1. Circuit arrangement for connecting a voice-controlled accessory device (SPZ) associated with a telephone station (FE) to a telephone line (FL), the voice-controlled accessory device (SPZ) including a voice recognition unit (SPE) and a selection control unit (AS), characterized in that a switching unit (SE) of a connection device (ANE) is looped into an a-wire (a), a b-wire (b), and a ground wire (EL) of the telephone line (FL), and is connected with the voice recognition unit (SPE) and, via an interrupt unit (UE) of the connection device (ANE), with the selection control unit (AS), thereby connecting the telephone station via the telephone line (FL) either to an exchange or to the voice-controlled accessory device (SPZ), that the connection device (ANE) includes a line status identification logic unit (APL), a dialing unit (WE), a loop monitoring unit (SLU) and a ground button monitoring unit (ETU) which, on the one hand, are looped into the telephone line (FL) and, on the other hand, are connected to the selection control unit (AS) via a first interface unit (IF1) of the voice-controlled accessory device (SPZ), and that a first switch (S1), which connects the a-wire (a) and the b-wire (b) in the connection device (ANE), is connected with the selection control unit (AS) via the first interface unit (IF1).

2. A circuit arrangement as claimed in claim 1, characterized in that in response to direct acoustical entry of words and/or digits via a receiver microphone of the telephone station (FE), the voice-controlled accessory device (SPZ) controls automatic dialing of the desired number in the dialing unit (WE).

3. A circuit arrangement as claimed in claim 1 or 2, characterized in that a series combination of a videotex modem (BTX-M) and a videotex monitor-

ing unit (BTX-Ü) is connected via a second switch (S2) in the connection device (ANE) to the a-wire (a) and the b-wire (b) of the telephone line (FL), that the second switch (S2) and the videotex monitoring unit (BTX-Ü) are connected via the first interface unit (IF1) to the selection control unit (AS), that the selection control unit (AS) is connected via a second interface unit (IF2) to a videotex decoder of a television set, and that through direct acoustical entry of words and/or digits via the receiver microphone of the telephone station (FE), a videotex service is controlled via the voice-controlled accessory device (SPZ).

4. A circuit arrangement as claimed in any one of the preceding claims, characterized in that the dialing unit (WE) and the interrupt unit (UE) include a first module for dial pulsing and a second module for multi-frequency signalling.

5. A circuit arrangement as claimed in claim 2 or 4, characterized in that in combination with or instead of dialing by acoustical entry of words and/or digits, manual dialing can be performed by means of a rotary dial or a keypad on the telephone station (FE).

## Revendications

1. Agencement de circuit pour connecter un dispositif auxiliaire (SPZ) à commande vocale associé à un poste téléphonique (FE) sur une ligne téléphonique (FL), dans lequel le dispositif auxiliaire à commande vocale (SPZ) comporte une unité de reconnaissance de la parole (SPE) et une commande de sélection (AS), caractérisé en ce qu'une unité de commutation (SE) d'un dispositif de transfert (ANE) est bouclée dans un fil-a (a), un fil-b (b) et un fil de terre (EL) de la ligne téléphonique (FL) et est connectée à l'unité de reconnaissance de la parole (SPE) et, à travers une unité d'interruption (UE) du dispositif de transfert (ANE), à la commande de sélection (AS), au moyen duquel le poste téléphonique peut être connecté à travers la ligne téléphonique (FL) soit sur un central téléphonique soit sur un dispositif auxiliaire (SPZ) à commande vocale, en ce que le dispositif de transfert (ANE) comporte une logique de vérification de l'état de la ligne (APL), une unité de sélection (WE), un dispositif de surveillance de boucle (SLU) et un dispositif de surveillance du bouton de terre (ETU), qui, d'une part, sont connectés de façon bouclée sur la ligne téléphonique (FL) et, d'autre part, sont connectés à la commande de sélection (AS) via une première unité d'interface (IF1) du dispositif auxiliaire (SPZ) à commande vocale, et en ce que dans le dispositif de transfert (ANE) un premier interrupteur (S1) connectant le fil-a (a) et le fil-b (b) est connecté à l'unité de commande (AS) à travers la première unité d'interface (IF1).

2. Agencement de circuit selon la revendication 1, caractérisé en ce que le dispositif auxiliaire à commande vocale (SPZ) commande une numérotation automatique du numéro de l'abonné demandé dans l'unité de sélection (WE) par entrée acoustique directe de mots et/ou de chiffres à travers un microphone du combiné du poste téléphonique (FE).

3. Agencement de circuit selon la revendication 1 ou 2, caractérisé en ce qu'un circuit série composé d'un modem télétexte (BTX-M) et un dispositif de surveillance télétexte (BTX-Ü) est connecté avec le fil-a (a) et le fil-b (b) de la ligne téléphonique (FL) à travers un deuxième interrupteur (S2) dans le dispositif de transfert (ANE), en ce que le deuxième interrupteur (S2) et l'unité de surveillance télétexte (BTX-Ü) sont connectés à la commande de sélection (AS) à travers la première unité d'interface (IF1), en ce que la commande de sélection (AS) est connectée au décodeur télétexte d'un poste de télévision à travers une deuxième unité d'interface (IF2) et en ce qu'au moyen du dispositif auxiliaire (SPZ) à commande vocale, et en ce qu'un service de télétexte est commandé par l'entrée acoustique directe de mots et/ou de chiffres par le microphone du combiné du poste téléphonique (FE).

4. Agencement de circuit selon l'une des revendications précédentes, caractérisé en ce que l'unité de sélection (WE) et l'unité d'interruption (UE) comportent un premier module pour la procédure de numérotation par impulsions (IWV) et un deuxième module pour la procédure de numérotation par codage multifréquence (MFV).

5. Agencement de circuit selon la revendication 2 ou 4, caractérisé en ce qu'en combinaison avec, ou à la place de la numérotation par entrée vocale de mots et/ou de chiffres, on peut réaliser une numérotation manuelle au moyen d'un cadran ou d'un clavier du poste téléphonique (FE).

zum
BTX
Decoder

IF2

AS

AE

SPE

SPZ

IF1

ANE

UAE

UE

IWV-D

MFV-D

a

APL

WE

K1

a

SE

FE

BTX-Ü

S2

Erdtaste

BTX-M

ETU

S1

K2

EL

FL

SLU

b

K3

FL

EL

b

EP 0 168 039 B1